# EUROPÄISCHE PATENTSCHRIFT

(11) **EP 0 767 566 B1**
(45) Veröffentlichungstag und Bekanntmachung des Hinweises auf die Patenterteilung: **04.01.2006**
(21) Anmeldenummer: 96115852.4
(22) Anmeldetag: 02.10.1996
(51) Int. Cl.: H04M 1/00

(54) **Verfahren und Schaltungsanordnung zur Steuerung von in einer optischen Anzeigeeinrichtung anzuzeigenden Informationen**
Method and circuit for controlling a display device for visual information
Méthode et circuit de commande d'un dispositif d'affichage pour des informations à visualiser

(30) Priorität: 06.10.1995 DE 19537372
(43) Veröffentlichungstag der Anmeldung: 09.04.1997
(73) Patentinhaber: SIEMENS AKTIENGESELLSCHAFT, 80333 München (DE)
(72) Erfinder: Eble, Markus, 81541 München (DE); Honold, Stefan, 81476 München (DE)

(56) Entgegenhaltungen:
- DE-A- 3 724 613
- US-A- 4 932 022
- US-A- 5 420 973

## Beschreibung

Die Erfindung betrifft ein Verfahren nach dem Oberbegriff des Anspruchs 1 sowie eine Schaltungsanordnung nach Anspruch 8.

Aus der DE-OS 3724613 ist ein Verfahren zur optischen Anzeige von verbindungsunabhängigen und verbindungsbegleitenden Prozessen auf dem Display eines digitalen, für Sprach- und/oder Datenübertragung geeigneten Fernmeldeendgerätes bekannt. Das Endgerät verfügt über mehrere Untereinheiten für die selbständige Durchführung bestimmter, durch externe oder durch Betätigung von Ziffern-, Funktions- und Namenstasten gebildete interne Anreize ausgelöster verbindungsbegleitender oder verbindungsunabhängiger Prozesse über eine Displaysteuerung. Den durch die externen oder internen Anreize ausgelösten Prozesse sind unterschiedliche Anzeigeprioritäten und Mindestanzeigeseiten zugeordnet. Die Anzeigepriorität des angezeigten Prozesses ist nach Ablauf der Mindestanzeige zeitlich veränderbar, wobei die Anzeigepriorität die aktuelle Anzeige schrittweise verringert. Die Anzeigepriorität des angezeigten Prozesses wird mit den Anzeigeprioritäten anzuzeigender Prozesse wiederholt verglichen. Nach Durchführung des Prioritätsvergleiches wird der Prozeß höchster Anzeigepriorität auf dem Display angezeigt. Mit diesem Verfahren werden mindestens zwei verschiedene Prozeßbezeichnungen zyklisch angezeigt. Ebenso können Anzeigeteile einer einzigen Prozeßbezeichnung zyklisch angezeigt werden. Dagegen können Prozesse unterschiedlicher Anzeigepriorität nicht gleichzeitig angezeigt werden.

Ausgehend von diesem Stand der Technik liegt der Erfindung die Aufgabe zugrunde, ein Verfahren und eine Schaltungsanordnung der eingangs genannten Art anzugeben, die es ermöglichen, eine optische Anzeigeeinrichtung in einem erweiterten Umfang zu nutzen.

Diese Aufgabe wird durch ein Verfahren und durch eine Schaltungsanordnung gelöst, die in den Patentansprüchen definiert sind.

Die Erfindung ist mit einer Mehrzahl von Vorteilen verbunden. Sie ermöglicht sowohl Informationen entsprechend ihrer unterschiedlichen Anzeigeprioritäten in zeitlicher Abfolge anzuzeigen, als auch zusätzlich, d.h. gleichzeitig mit den vorstehend genannten Informationen, weitere Informationen anzuzeigen. Trotz dieser gegenüber dem Stand der Technik erweiterten Anzeigemöglichkeiten ist das Steuerungsprogramm des Anzeigeeinrichtungs-Steuerwerks, welches das erfindungsgemäße Verfahren definiert, in einfacher Weise ausgestaltet.

Dadurch, daß eine bestimmte anzuzeigende Information als Untermenge der gespeicherten anzuzeigenden Information mit unterschiedlicher weiterer Information in unterschiedlichen Prioritätsstufen gespeichert sein kann, kann diese Informationsuntermenge auch bei prioritätsbedingter Änderung der angezeigten Information weiterhin angezeigt werden.

Die Erfindung wird nun anhand der Zeichnungen näher beschrieben. Es zeigt
- Fig. 1: ein Fernmeldeendgerät zur Durchführung des erfindungsgemäßen Verfahrens; und
- Fig. 2 und 3: Inhalte von Displayspeichern in einem Fernmeldeendgerät nach Fig. 1.

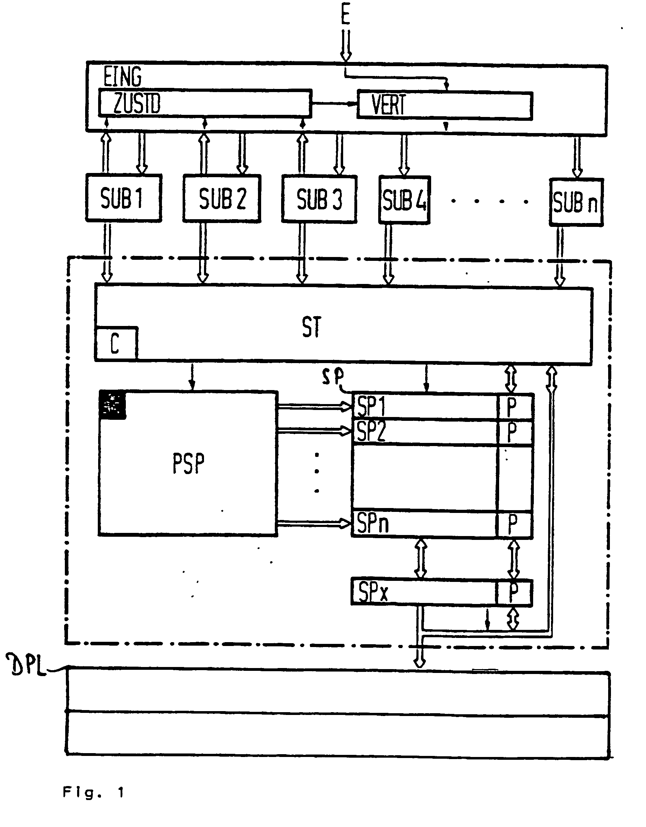

Das in Fig. 1 dargestellte Fernmeldeendgerät weist eingangsseitig eine Eingangsschaltung EING auf, die einen Zustandsspeicher ZUTD und einen Anreizverteiler.VERT umfaßt. Mit der Eingangsschaltung EING sind mehrere sog. Untereinheiten SUB1, SUB2, ..., SUBn, wie in der Zeichnung dargestellt, verbunden.

Die Untereinheiten SUB1, SUB2, ..., SUBn führen auf eine Steuerung ST der optischen Anzeigeeinrichtung. Der Steuerung ST ist ein Zeitglied C zugeordnet, das der Messung der Zeit einer Anzeige in einer optischen Anzeigeeinrichtung (Display) DPL dient. Die gemessene Zeit kann von der Steuerung ST mit einer jedem Prozeß zugeordneten Mindest- und Maximalanzeigezeit verglichen werden.

Die Steuerung ST ist ferner mit einem Speicher PSP verbunden, der Anzeigeparameter der von den Untereinheiten SUB1, SUB2, ..., SUBn durchgeführten Prozessen enthält. Zu den Anzeigeparametern gehören den Prozessen zugeordnete Anzeigeprioritäten bzw. Prioritätsstufen P1, P2, ..., Pn, gegebenenfalls die Angabe von Mindest- und Maximalanzeigezeiten, und die eigentlichen Prozeßbezeichnungen, d.h. Informationen, die auf der optischen Anzeigeeinrichtung DPL angezeigt werden.

Die Steuerung ST steht weiterhin mit Zwischenspeichern SP1, SP2, ..., SPn in Verbindung. Diese Zwischenspeicher dienen der Aufnahme von auf der optischen Anzeigeeinrichtung DPL anzuzeigenden Informationen, d.h. Bezeichnungen von Prozessen, die von den Untereinheiten SUB1, SUB2, ..., SUBn durchgeführt worden sind bzw. werden. Zusätzlich zu den anzuzeigenden Prozeßbezeichnungen bzw. Informationen werden in den Zwischenspeichern SP1, SP2, ..., SPn in Speicherplätzen P die zugehörigen Anzeigeprioritäten P1, P2, ..., Pn der anzuzeigenden Prozesse abgespeichert. Es kann vorgesehen sein, daß die Speicherplätze P unabhängig von den Zwischenspeichern SP1, SP2, ..., SPn, in denen die Prozeßbezeichnungen bzw. Informationen abgespeichert sind, ansteuerbar sind, so daß den in den Zwischenspeichern SP1, SP2, ..., SPn abgespeicherten Informationen unterschiedliche Prioritätsstufenwerten zugeordnet werden können.

Ein weiterer Speicher SPx enthält die jeweils in der optischen Anzeigeeinrichtung DPL angezeigte Prozeßbezeichnung sowie in einem Speicherplatz P die Anzeigepriorität Px der angezeigten Prozeßbezeichnung.

Über den Eingang des Fernmeldeendgerätes werden der Eingangsschaltung EING externe und interne Anreize E zugeführt. Externe Anreize werden dem Fernmeldeendgerät beispielsweise von einer öffentlichen Vermittlungseinrichtung oder der Zentrale einer Nebenstellenanlage zugeführt. Interne Anreize werden durch Betätigen von Ziffern-, Funktions- oder Namenstasten gebildet. Die Anreize E werden dem Anreizverteiler VERT zugeführt, der diese abhängig von den im Zustandsspeicher ZUST abgespeicherten aktuellen Daten über die einzelnen Untereinheiten SUB1, SUB2, ..., SUBn an diese Untereinheiten weiterleitet. Die im Zustandsspeicher ZUSTD abgespeicherten Daten geben die den Untereinheiten zugeordnete Funktion sowie den momentanen Betriebszustand an. Diese Daten werden im Zustandspeicher ZUSTD von den Untereinheiten vermittelt. Den Untereinheiten SUB1, SUB2, ..., SUBn sind unterschiedliche Funktionen zugeteilt.

Die Untereinheit SUB1 führt beispielsweise Prozesse im Zusammenhang mit dem Aufbau und der Durchführung von Sprachverbindungen durch.

Die Untereinheit SUB1 führt beispielsweise Prozesse durch, die mit den sogenannten Check-Funktionen zusammenhängen. Mit diesem Begriff werden beispielsweise das Programmieren, Kontrollieren oder Löschen von Zielen auf Namenstasten und Direktruftasten und für individuelle Kurzwahl zusammengefaßt. Diese Prozesse werden durch Betätigung der entsprechenden Funktions- und/oder Zifferntasten am Fernmeldeendgerät ausgelöst. Die von der Untereinheit SUB2 durchzuführenden Prozesse können in Zeiten durchgeführt werden, in denen keine Sprachverbindung aufgebaut wird oder besteht. Die von der Untereinheit SUB2 durchzuführenden Prozesse können jedoch auch verbindungsbegleitend stattfinden.

Die weiterhin in der Figur dargestellten Untereinheiten SUB3 - SUBn dienen der selbsttätigen Durchführung weiterer Prozesse. Hierzu gehören beispielsweise Prozesse im Zusammenhang mit den Aufbau und der Durchführung von Datenverbindungen, mit der Bedienerführung sowie mit der Realisierung von Leistungsmerkmalen, wie beispielsweise Anzeige von Datum und Uhrzeit.

Die den Untereinheiten über die Eingangsschaltung EING zugeführten Anreize E lösen in den Untereinheiten die selbsttätige Durchführung der entsprechenden Prozesse aus. Diese Prozesse sowie die von den Untereinheiten SUB1, SUB2, ..., SUBn abgegebenen Ausgangssignale werden im folgenden nur insoweit berücksichtigt, als sie der Ansteuerung der optischen Anzeigeeinrichtung DPL dienen. Dabei ist vorausgesetzt, daß das Fernmeldeendgerät lediglich über eine optische Anzeigeeinrichtung DPL eingeschränkter Anzeigekapazität verfügt. Die optische Anzeigeeinrichtung DPL besteht beispielsweise aus zwei Zeilen, wobei insbesondere eine Zeile, vorzugsweise die untere Zeile, der Anzeige eines Menüs dient.

Das Menü wird möglichst immer während eines Verbindungsaufbaus, während eines Gesprächs oder beim Verbindungsabbau angezeigt. Es stellt eine Bedienerführung dar, die abhängig von der jeweiligen verbindungssituation bzw. vom jeweiligen vermittlungstechnischen Zustand die jeweils möglichen Leistungsmerkmale zur Auswahl anbietet. Es kann dabei zu jedem Zeitpunkt immer nur ein Menüpunkt auf der Anzeigevorrichtung DPL (in der 2. Zeile) angeboten werden. Die weiteren Punkte können durch Betätigen sogenannter Blättertasten des Endgeräts zyklisch zur Anzeige gebracht werden. Mit einer sogenannten OK-Taste kann die angebotene Funktion bestätigt (d.h. ausgeführt) werden. Beim Verbindungsauf/abbau kann für die Anzeige des Menüs immer die Priorität für eine aktive Verbindung (siehe im nachfolgenden "Anzeigepriorität/Prioritätsstufe 3") verwendet werden. Beim Aufbau der Verbindung wird zusätzlich zum Menü (2. Zeile) in der 1. Zeile der Name und die Rufnummer des gerufenen Teilnehmers angezeigt. Beide Display-Zeilen sind immer einer Prioritätsstufe (hier z.B. "3") zugeordnet. Das Menü soll möglichst immer angeboten werden und erhält deshalb die relativ hohe Priorität "3", auf der auch Rufnummer und Name angezeigt werden. Während des Gesprächs gibt es jedoch weitere Informationen (z.B. Gebühren (Prioritätsstufe 5) oder die Signalisierung eines Zweitanrufs (Prioritätsstufe 4)), die mit ihren fest zugeordneten Prioritätsstufen angezeigt werden sollen. Bei der Signalisierung des Zweitanrufs wird kein Menü angeboten, da hier lediglich die Übernahme des Anrufs möglich ist, was ausschließlich per Anrufübernahme-Taste durchgeführt werden kann; es existiert kein entsprechender Menüpunkt.

Der Abschluß jedes Prozesses, z.B. die durch die Betätigung einer Zifferntaste erfolgte Bildung eines Wahlimpulses wird der Steuerung ST von der betreffenden Untereinheit mitgeteilt.

Das der Steuerung ST zugeordnete Steuerungsprogramm ist in der Weise ausgestaltet, daß Informationen unterschiedlicher Prioritätsstufen eine übereinstimmende Informationsuntermenge (z.B. "Menü") aufweisen. Weiterhin kann vorgesehen sein, daß die Prioritätsstufe angezeigter Informationen nach einer Mindestanzeigezeit um mindestens zwei Prioritätsstufen verringert wird. Die Anzahl der zu verringernden Prioritätsstufen wird so gewählt, daß eine noch zu beschreibende Informationsuntermenge, z.B. das "Menü", möglichst immer, (bei einem Fernmeldegeendgerät: während eines Verbindungsaufbaus, einer aufgebauten Verbindung, und während eines Verbindungsabbaus) angezeigt wird. Dabei kann die Prioritätsstufe angezeigter Informationen in Abhängigkeit der Anzeigezeit verringert werden oder die Prioritätsstufe angezeigter Informationen kann in Abhängigkeit zustandsindividueller (bei Fernmeldegeräten: vermittlungszustandsindividueller) Informationen (interne bzw. externe Anreize E) verringert werden. Anstelle einer Verringerung der Prioritätsstufe angezeigter Informationen um zwei Prioritätsstufen können die angezeigten Informationen im Speicher gelöscht werden, so daß die dann im Speicher SP abgespeicherte Prozeßbezeichnung bzw. Information höchster Priorität angezeigt wird.

Angezeigte Informationen sind in dem Speicher SPx abgespeichert. Die in dem Speicher SPx abgespeicherten, angezeigten Informationen werden durch anzuzeigende Informationen, die dieselbe Prioritätsstufe wie die angezeigten Informationen haben, überschrieben. Damit werden Informationen, die dieselbe Prioritätsstufe wie die angezeigten Informationen aufweisen, aber erst nach dem Beginn der Anzeige auftreten, anstelle der ursprünglich angezeigten Informationen angezeigt.

Ein Teil der Prozeßbezeichnungen bzw. der anzuzeigenden Informationen weisen eine übereinstimmende Informationsuntermenge auf. Dies ist insbesondere das schon genannte Menü, das vorzugsweise jeweils in einem bestimmten Anzeigebereich, beispielsweise bei einem zweizeiligen Display in der unteren Displayzeile angezeigt wird.

Beispielsweise sind folgende Anzeigeprioritäten für folgende Anzeigen vorgesehen:
- 1: (für zeitbegrenzte Anzeigen)
- 2: (Check-/Service/Funktion)
- 3: (Rufnumrner/Name)
(Menü)
- 4: (Signalisierung eines Zweitanrufes)
- 5: (Gebührenanzeige)
(Menü)

Die Prozeßbezeichnungen mit den Anzeigeprioritäten 3 und 5 weisen also jeweils die übereinstimmende Informationsuntermenge "Menü" auf. Das "Menü" wird bei einem zeitweiligen Menü jeweils in der unteren Zeile angezeigt.

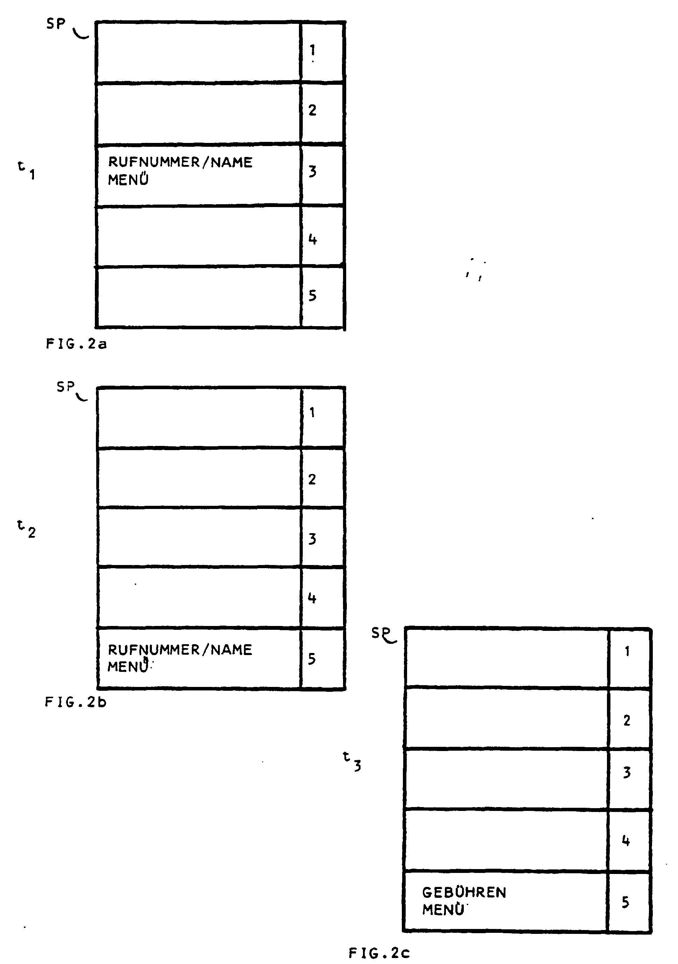

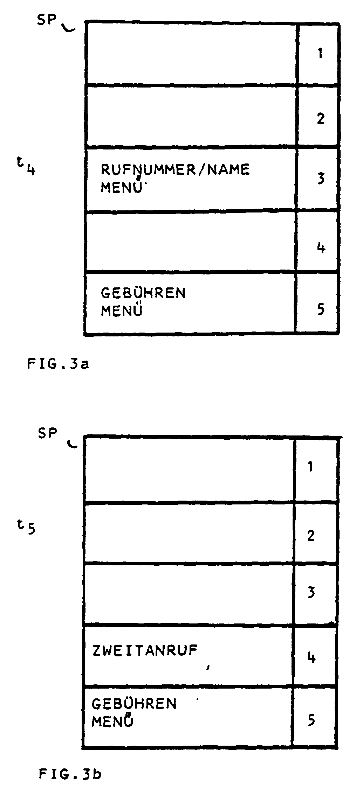

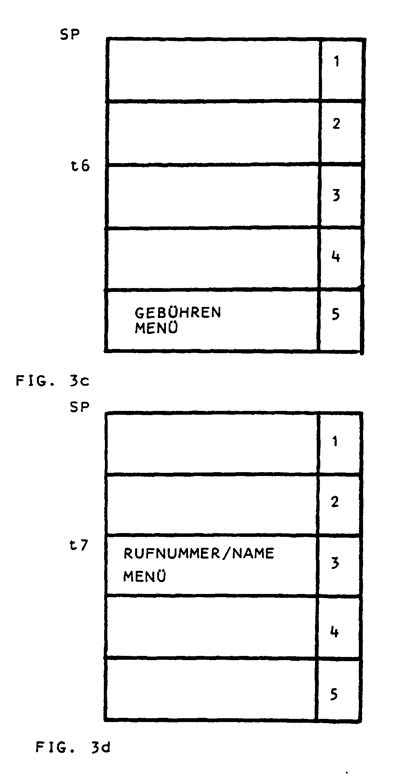

Anhand der Fig. 2 und 3 werden nun Beispiele für die Verwaltung und die Anzeige von Prozeßbezeichnungen dargestellt. Dabei ist jeweils schematisch der Inhalt des Displayspeichers SP mit den jeweiligen Prioritätsstufen angegeben.

In Fig. 2a befindet sich zum Zeitpunkt t1 in dem Speicher SP3 die Prozeßbezeichnung
"Rufnummer/Name
Menü"
mit der Priorität 3. Da der Displayspeicher keine weiteren Prozeßbezeichnungen mit einer Priorität > 3 enthält, wird die im Speicher SP3 abgespeicherte Prozeßbezeichnung auf der optischen Anzeigeeinrichtung DPL angezeigt. Erfindungsgemäß kann vorgesehen sein, daß die Priorität dieser Prozeßbezeichnung um zwei Prioritätsstufen verringert wird. Damit erhält die Prozeßbezeichnung "Rufnummer/Name; Menü" die Priorität 5. Dies ist in Fig. 2b dargestellt, die den Inhalt des Displayspeichers SP zum Zeitpunkt t2 zeigt. Da der Displayspeicher zu diesem Zeitpunkt t2 keine weitere Prozeßbezeichnung einer Priorität > 5 enthält, wird unverändert "Rufnummer/Name; Menü" angezeigt.

Zum Zeitpunkt t3 tritt die Prozeßbezeichnung
"Gebühren
Menü"
auf. Diese Prozeßbezeichnung hat die Prioritätsstufe 5 und damit dieselbe Prioritätsstufe wie die in Fig. 2b dargestellte Prozeßbezeichnung "Rufnummer/Name; Menü".

Erfindungsgemäß wird zum Zeitpunkt t3 die ursprünglich angezeigte Prozeßbezeichnung "Rufnummer/Name; Menü" durch die aufgetretene Prozeßbezeichnung "Gebühren; Menü" gleicher Prioritätsstufe überschrieben. Die übereinstimmende Informationsmenge "Menü" wird zu allen drei Zeitpunkten t1, t2 und t3 angezeigt.

Wie in Fig. 3a gezeigt, befindet sich zu einem Zeitpunkt t4 in dem Speicher SP3 die Prozeßbezeichnung "Rufnummer/Name; Menü" mit der Prioritätsstufe 3 und im Speicher SP5 die Prozeßbezeichnung ("Gebühren; Menü") mit der Prioritätsstufe 5, so daß die Prozeßbezeichnung "Rufnummer/Name; Menü" angezeigt wird.

Zu einem Zeitpunkt t5 wird in den Speicher SP4 die Prozeßbezeichnung "Zweitanruf", welche die Anzeigepriorität 4 hat, eingeschrieben. Im Speicher SP5 befindet sich die Prozeßbezeichnung "Gebühren; Menü" mit der Prozeßbezeichnung 5, so daß die Prozeßbezeichnung "Zweitanruf" mit der höheren Anzeigepriorität 4 angezeigt wird.

Zum Zeitpunkt t6 steht der Zweitanruf nicht mehr an, so daß "Gebühren; Menü" angezeigt wird.

Ist die Prioritätsstufe einer Anzeige mit "Menü" abgesunken, so wird beim Blättern durch die Menüpunkte die Prioritätsstufe der Anzeige mit "Menü" wieder angehoben. Der Benutzer des Endgeräts arbeitet zum Zeitpunkt t7 mit dem Menü, dessen Anzeige möglichst nicht durch andere Anzeigen gestört werden soll. Damit die 1. Zeile wieder zu den angebotenen Menüpunkten (wie z.B. "Rückruf", "Rückfrage", etc.) paßt, werden Name und Rufnummer des B-Teilnehmers dort erneut angezeigt (Fig. 3d).

Nach diesem Anheben der Prioritätsstufe der Anzeige mit "Menü" beginnt erneut (wieder nach der bereits erwähnten festen Mindestzeit) der Vorgang der Prioritätsstufenverringerung.

Das Menü wird also entweder mit "Rufnummer/Name" oder mit den "Gebühren" kombiniert, wobei "Rufnummer/Name" sowohl eine Prioritätsstufe "3" als auch die Prioritätsstufe "5" haben kann, während der Anzeige "Gebühren" immer in Prioritätsstufe "5" zugeordnet ist.

## Patentansprüche

1. Verfahren zur Steuerung von in einer optischen Anzeigeeinrichtung (DPL) anzuzeigenden Informationen in einem programmgesteuerten Gerät (T), insbesondere in einem Fernmeldegerät, wobei die anzuzeigenden und die angezeigten Informationen in einem Speicher (SP) abspeicherbar und wobei den anzuzeigenden Informationen Anzeigeprioritätsstufen (P1, ..., Pn) zugeordnet sind, so daß Informationen höherer Prioritätsstufe (P1, P2, ...) vorrangig gegenüber Informationen geringerer Prioritätsstufe (..., Pn-1, Pn) angezeigt werden, wobei die Prioritätsstufe angezeigter Informationen veränderbar ist,
**dadurch gekennzeichnet,**
**daß** die Informationen, z.B. Rufnummer/Name, Menü, einen ersten Informationsteil, z.B. Rufnummer/Name, und einen wenigstens einen Menüpunkt bezeichnenden, zweiten Informationsteil, z.B. Menü, aufweisen, und
**daß** Informationen mit unterschiedlichen Anzeigeprioritätsstufen (P1 ,..., Pn) einen gleichen zweiten Informationsteil aufweisen.

2. Verfahren nach Anspruch 1,
**dadurch gekennzeichnet,**
**daß** die Priorität angezeigter Informationen um mindestens 2 Prioritätsstufen verringert wird.

3. Verfahren nach einem der vorstehenden Ansprüche,
**dadurch gekennzeichnet,**
**daß** die übereinstimmende Informationsuntermenge (Menü) der Informationen unterschiedlicher Prioritätsstufen in einem vorgebbaren Bereich der optischen Anzeigeeinrichtung (DPL) angezeigt sind.

4. Verfahren nach einem der vorstehenden Ansprüche,
**dadurch gekennzeichnet**,
die Prioritätsstufe angezeigter Informationen in Abhängigkeit der Anzeigezeit verringert wird.

5. Verfahren nach einem der Ansprüche 1 bis 3,
**dadurch gekennzeichnet,**
**daß** die Prioritätstufe angezeigter Informationen in Abhängigkeit zustandsindividueller Informationen verringert wird.

6. Verfahren nach einem der vorstehenden Ansprüche,
**dadurch gekennzeichnet,**
**daß** angezeigte Informationen in dem Speicher (SP) abgespeichert sind und daß die im Speicher (SP) abgespeicherten, angezeigten Informationen durch anzuzeigende Informationen, die dieselben Prioritätsstufe wie die angezeigten Informationen haben, überschrieben werden.

7. Verfahren nach einem der vorstehenden Ansprüche,
**dadurch gekennzeichnet,**
**daß** anstelle einer Verringerung der Prioritätsstufe angezeigter Informationen um 2 Prioritätsstufen die angezeigten Informationen im Speicher gelöscht werden.

8. Schaltungsanordnung zur Steuerung von in einer optischen Anzeigeeinrichtung (DPL) anzuzeigenden Informationen in einem programmgesteuerten Gerät (T), mit
einem Speicher (SP) zur Aufnahme der anzuzeigenden Informationen, wobei den anzuzeigenden Informationen Anzeigeprioritätsstufen (P1, ..., Pn) zugeordnet sind, so daß Informationen höherer Prioritätsstufe (P1, P2, ...) vorrangig gegenüber Informationen geringerer Prioritätsstufe (..., Pn-1, Pn) angezeigt werden, wobei die Prioritätsstufe angezeigter Informationen veränderbar ist,
**dadurch gekennzeichnet,**
**daß** die Informationen, z.B. Rufnummer/Name, Menü, einen ersten Informationsteil, z.B. Rufnummer/Name, und einen wenigstens einen Menüpunkt bezeichnenden, zweiten Informationsteil, z.B. Menü, aufweisen, und
**daß** Informationen mit unterschiedlichen Anzeigeprioritätsstufen (P1 ,..., Pn) einen gleichen zweiten Informationsteil aufweisen.

9. Schaltungsanordnung nach nspruch 8,
**dadurch gekennzeichnet,**
**daß** der Speicher (SP) jeweils einen Speicherbereich (SP1, ..., SPn) für die Aufnahme von Informationen einer Prioritätsstufe aufweist.

10. Schaltungsanordnung nach einem der Ansprüche 8 bis 9,
**dadurch gekennzeichnet,**
**daß** die optische Anzeigeeinrichtung (DPL) mindestens zwei Anzeigenbereiche aufweist, von denen ein Anzeigenbereich die übereinstimmende Informationsuntermenge (Menü) anzeigt.

## Claims

1. Method for controlling the appearance of items of information on an optical display (DPL) incorporated in a program-controlled device (T), in particular in a telecommunication device, wherein both information to be displayed and the currently displayed information can be stored in a memory (SP), and wherein display priority levels (P1, ... , Pn) are allocated to the items of information to be displayed, so that information with a higher priority level (P1, P2 ... ) is displayed with a higher priority in relation to information with a lower priority level (..., Pn-1, Pn), wherein the priority level of a displayed item of information can be changed,
**characterised in that**
said items of information, e.g. call number/name, menu, have a first information part, e.g. call number/name, and a second information part, e.g. menu, comprising at least one menu item,
and **in that**
items of information with different display priority levels (P1,...,Pn) comprise the same second information part.

2. Method according to Claim 1,
**characterised in that** the priority of displayed information is reduced by at least two priority levels.

3. Method according to one of the above claims,
**characterised in that**
the concurrent information subset (menu) of information of different priority levels appears in a predefinable area of the optical display (DPL).

4. Method according to one of the above claims,
**characterised in that**
the priority level of displayed information is reduced depending on the display time.

5. Method according to one of Claims 1 to 3,
**characterised in that**
the priority level of displayed information is reduced depending on status-specific information.

6. Method according to one of the above claims,
**characterised in that**
the information displayed is stored in the memory (SP), and **in that** the displayed information stored in the memory (SP) is overwritten with information to be displayed that has the same priority level as the displayed information.

7. Method according to one of the above claims,
**characterised in that**,
instead of a reduction in the priority level of displayed information by two priority levels, the displayed information is erased in the memory.

8. Circuit arrangement for controlling the appearance of information on an optical display (DPL) incorporated in a program-controlled device (T), said circuit arrangement having
a memory (SP) for recording the information to be displayed, wherein display priority levels (P1, ... , Pn) are allocated to the items of information to be displayed so that information with a higher priority level (P1, P2 ... ) is displayed with a higher priority in relation to information with a lower priority level (..., Pn-1, Pn), whereby the priority level of a displayed item of information can be changed,
**characterised in that**
said items of information, e.g. call number/name, menu, have a first information part, e.g. call number/name, and a second information part, e.g. menu, comprising at least one menu item,
and **in that**
items of information with different display priority levels (P1,...,Pn) comprise the same second information part.

9. Circuit arrangement according to Claim 8,
**characterised in that**
the memory (SP) has a memory location (SP1,...,SPn) in each case for recording information in each priority level.

10. Circuit arrangement according to one of Claims 8 to 9,
**characterised in that**
the optical display (DPL) comprises at least two display areas, one of which displays the concurrent information subset (menu).

## Revendications

1. Procédé de commande d'informations à afficher dans un dispositif d'affichage optique (DPL) dans un appareil (T) commandé par programme, en particulier dans un appareil de télécommunications, les informations à afficher et affichées pouvant être mises en mémoire dans une mémoire (SP) et des niveaux de priorité d'affichage (P1, ..., Pn) étant affectés aux informations à afficher, de sorte que des informations de niveau de priorité supérieur (P1, P2, ...) sont affichées prioritairement par rapport à des informations de niveau de priorité moindre (..., Pn-1, Pn), le niveau de priorité d'informations affichées étant modifiable, **caractérisée en ce que** les informations, par exemple numéro d'appel / nom, menu, présentent une première partie d'informations, par exemple numéro d'appel / nom, et une deuxième partie d'informations, par exemple menu, désignant au moins un point de menu et **en ce que** des informations avec des niveaux de priorité d'affichage différents (P1, ..., Pn) présentent une même deuxième partie d'informations.

2. Procédé selon la revendication 1, **caractérisée en ce que** la priorité d'informations affichées subit une réduction d'au moins 2 niveaux de priorité.

3. Procédé selon l'une des revendications précédentes, **caractérisée en ce que** le sous-ensemble d'informations identique (menu) des informations de niveaux de priorité différents est affiché dans une zone prédéfinissable du dispositif d'affichage optique (DPL).

4. Procédé selon l'une des revendications précédentes, **caractérisée en ce que** le niveau de priorité d'informations affichées subit une réduction en fonction du temps d'affichage.

5. Procédé selon l'une des revendications 1 à 3, **caractérisée en ce que** le niveau de priorité d'informations affichées subit une réduction en fonction d'informations individuelles à l'état.

6. Procédé selon l'une des revendications précédentes, **caractérisée en ce que** des informations affichées sont mises en mémoire dans la mémoire (SP) et **en ce que** les informations affichées et mises en mémoire dans la mémoire (SP) sont remplacées par des informations à afficher qui ont le même niveau de priorité que les informations affichées.

7. Procédé selon l'une des revendications précédentes, **caractérisée en ce que**, au lieu de réduire de 2 niveaux de priorité le niveau de priorité d'informations affichées, les informations affichées sont effacées dans la mémoire.

8. Circuit de commande d'informations à afficher dans un dispositif d'affichage optique (DPL) dans un appareil (T) commandé par programme, comprenant une mémoire (SP) pour enregistrer les informations à afficher, des niveaux de priorité d'affichage (P1, ..., Pn) étant affectés aux informations à afficher, de sorte que des informations de niveau de priorité supérieur (P1, P2, ...) sont affichées prioritairement par rapport à des informations de niveau de priorité moindre (..., Pn-1, Pn), le niveau de priorité d'informations affichées étant modifiable, **caractérisé en ce que** les informations, par exemple numéro d'appel / nom, menu, présentent une première partie d'informations, par exemple numéro d'appel / nom, et une deuxième partie d'informations, par exemple menu, désignant au moins un point de menu et **en ce que** des informations avec des niveaux de priorité d'affichage différents (P1, ..., Pn) présentent une même deuxième partie d'informations.

9. Circuit selon la revendication 8, **caractérisé en ce que** la mémoire (SP) comprend respectivement une zone de mémoire (SP1, ..., SPn) pour l'enregistrement d'informations d'un niveau de priorité.

10. Circuit selon l'une des revendications 8 à 9, **caractérisé en ce que** le dispositif d'affichage optique (DPL) comprend au moins deux zones d'affichage dont une zone d'affichage affiche le sous-ensemble d'informations (menu) identique.
